# EUROPÄISCHE PATENTSCHRIFT

(11) **EP 1 345 009 B1**
(45) Veröffentlichungstag und Bekanntmachung des Hinweises auf die Patenterteilung: **22.12.2004**
(21) Anmeldenummer: 03005368.0
(22) Anmeldetag: 12.03.2003
(51) Int. Cl.: G01D 11/24, F15B 13/00

(54) **Hydraulikbaugruppe und Steckerleiste**
Hydraulic assembly and connector strip
Assemblage hydraulique et barette de connexion

(30) Priorität: 12.03.2002 DE 20203943 U
(43) Veröffentlichungstag der Anmeldung: 17.09.2003
(73) Patentinhaber: HAWE Hydraulik GmbH & Co. KG, 81673 München (DE)
(72) Erfinder: Heusser, Martin, Dipl.-Ing. Univ., 81245 München (DE)
(74) Vertreter: Grünecker, Kinkeldey, Stockmair & Schwanhäusser Anwaltssozietät

(56) Entgegenhaltungen:
- EP-A- 0 545 794
- EP-A- 1 069 320
- EP-A- 1 072 867
- WO-A-00/28286
- WO-A-01/77534
- DE-A- 19 711 366
- DE-U- 20 105 982
- US-A- 4 608 870
- US-A- 6 164 323
- US-B1- 6 225 716
- LEUFGEN M ET AL: "PNEUMATIK CONTRA/PLUS ELEKTRONIK" OLHYDRAULIK UND PNEUMATIK, KRAUSSKOPF VERLAG FUR WIRTSCHAFT GMBH. MAINZ, DE, Bd. 45, Nr. 2, Februar 2001 (2001-02), Seiten 102-104, XP001065132 ISSN: 0341-2660

## Beschreibung

Die Erfindung betrifft eine Hydraulikbaugruppe gemäß Oberbegriff des Anspruchs 1 und eine Steckerleiste gemäß Oberbegriff des Anspruchs 10.

Aus EP 1 072 867 A ist es bekannt, bei einer Hydraulikbaugruppe einer elektrohydraulischen Staplersteuerung für einen Schieberkolben eines für eine Funktionseinheit vorgesehenen Steuerschiebers einen Analog-Hallsensor am Gehäuse des Steuerschiebers so zu positionieren, dass der Analog-Hallsensor auf die Stellbewegungen des mit einem Stabmagneten ausgestatteten Schieberkolbens anspricht und Signale an die zugeordnete Elektronik abgibt. Auf diese Weise lassen sich die Stellbewegungen des Steuerschiebers überwachen und präzise steuem, bzw. lässt sich mit dem Analogsignal die Pumpenfördermenge für den Steuerschieber steuern. Der Analog-Hallsensor wird über einen Stecker und ein Verbindungskabel mit der Steuerelektronik verbunden. Da Stapler oder andere Arbeitsgeräte mit mehreren Funktionseinheiten (Hydraulikzylinder, Hydraulikmotoren und dgl.) mehrere Steuerschieber in der Baugruppe aufweisen, wird der Verkabelungs- und Steckeraufwand für die elektronische Überwachung der Hydraulikbaugruppe wegen der vielen Signalgeber hoch.

Bei einer aus US 4 608 870 A bekannten Hydraulikbaugruppe sind für ein einziges zu überwachendes Steuerglied mehrere in einem Abdeckgehäuse enthaltene Signalgeber (Reedschalter) an einen Stecker angeschlossen. Für mehrere Steuerglieder in einer Baugruppe werden entsprechend viele Stecker, Verbindungskabel und Abdeckgehäuse benötigt.

Bei einer aus WO01/77534 A bekannten Ventilanordnung mit mehreren elektrisch betätigbaren Ventilen und einer programmierbaren elektronischen Steuereinrichtung für die Ventile ist an einem Gehäuseteil eine Anschlussanordnung für externe Sensoren und/oder Steuersignalgeber vorgesehen. Der Gehäuseteil ist lösbar an die Ventileinheit angesteckt. Der Gehäuseteil erstreckt sich über die aneinanderliegenden Ventile.

An einer aus US 6 225 716 B bekannten Kommutatoreinrichtung ist ein Bügel montiert, der zum Schutz und zur Positionierung eines Hallelementsensor-Pakets dient.

Bei einer aus DE 197 11 366 A bekannten Messvorrichtung sind Drucksensoren und Schaltungsträger zu einer konsolenförmigen Baueinheit zusammengefasst.

Bei einer aus EP 0 545 794 A bekannten elektrodynamischen Maschine mit integriertem Arbeitschaltkreis sind mehrere Sensoren und Schaltglieder in einem Bauteil zusammengefasst.

Von Interesse sind ferner: DE 201 05 982 U, EP 1 069 320 A, US 6 164 323 A, WO00/28286A und Ölhydraulik und Pneumatik, 45/2 02/2001, S. 102 - 104.

Der Erfindung liegt die Aufgabe zugrunde, eine Hydraulikbaugruppe der eingangs genannten Art sowie eine Steckerleiste anzugeben, mit denen der Verkabelungs- und Steckeraufwand bei elektronischer Überwachung mehrerer Steuerglieder durch Signalgeber vermindert und die Betriebssicherheit erhöht sind.

Die gestellte Aufgabe wird mit den Merkmalen des Anspruchs 1 und den Merkmalen des Anspruchs 10 gelöst.

Die gemeinsame Signalübergabe-Schnittstellenanordnung mit individuellen Signalabgriffen reduziert für die Signalgeber der mehreren überwachten Steuerglieder den Verkabelungs- und Steckeraufwand erheblich. Dennoch sind die Signale jedes Signalgebers individuell abgreifbar und auswertbar. Es kann ein einziges, an die Schnittstellenanordnung angeschlossenes Übertragungskabel vorgesehen sein. Die Schnittstellenanordnung wird in einem Einbaustecker vorgesehen, der alle Signallinien von den Signalgebern zusammenführt, und die gemeinsame Stromversorgung und den Nullleiter bereitstellt. Der Einbaustecker und die Signalgeber sind in die Steckerleiste eingegliedert, die sich mit baukastenartig kombinierbaren Einzelkomponenten in variabler Ausstattung vorfertigen lässt. Die Steckerleiste wird an den Gehäusen der Steuerglieder angebracht und positioniert die Signalgeber in ihren Operationspositionen in Bezug auf die Steuerglieder. Dies vereinfacht die Montage der Hydraulikbaugruppe erheblich.

Die Steckerleiste ist eine komplett vorfertigbare und prüfbare Einheit, in die die Signalgeber und der diesen gemeinsame, einzige Einbaustecker eingegliedert sind, wobei der Verkabelungs- und Steckeraufwand zur Verbindung mit der Steuerelektronik auf ein Minimum reduziert ist. Die fertige Baueinheit wird an dem wenigstens einem Gehäuse der Steuerglieder angebracht und positioniert automatisch die Signalgeber in ihren Operationspositionen bei den Steuergliedern. Der Einbaustecker fasst die Signale aller Signalgeber zentral zusammen, um sie an die Steuerelektronik zu übermitteln.

Zweckmäßig erfolgt die Stromversorgung bzw. der Nullleiteranschluss für alle Signalgeber gemeinsam in der Schnittstellenanordnung.

Aus der Zusammenarbeit jedes Stabmagneten, der sich in Richtung seiner Längsachse mit dem Steuerglied bewegt, und einem Analog-Hallsensor lassen sich klare und aussagefähige Signale ableiten.

Kostengünstig ist die Steckerleiste eine langgestreckte Wanne mit randseitiger Halterung für den Einbaustecker. Die Wanne kann unterseitig Längswände mit Vertiefungen zum Anbringen seitlich an gleichzeitig mehreren Gehäusen aufweisen.

Der Boden der Steckerleiste dient zum Positionieren der Signalgeber. Damit die Signalgeber optimal nahe und unabgeschirmt am Gehäuse positioniert werden können, sind sie zweckmäßig in Aussparungen des Bodens der Steckerleiste angeordnet. Die Leiterplatte dient zum Verbinden der Signalgeber mit dem Einbaustecker. Die Leiterplatte weist gegebenenfalls zusätzliche elektronische Komponenten zur Bearbeitung der Signale und dgl. auf und dient, zweckmäßig, zum Vorpositionieren der Signalgeber bei der Montage.

Die Wanne ist zweckmäßig mit Vergussmasse ausgegossen, die die Signalgeber, die Leiterplatte und die Anschlussverbindungen einbettet und stabilisiert.

Die Steckerleiste wird verschraubt oder mittels eines Klebebandes an dem wenigstens einen Gehäuse der Steuerglieder festgelegt, so dass die Signalgeber beispielsweise auf Stabmagneten der Steuerglieder ansprechen. Ein Klebeband kann auch zum Vorpositionieren der in die Aussparungen im Boden der Steckerleiste eingesetzten Signalgeber bündig mit der Bodenunterseite der Wanne bis zum Ausgießen der Wanne benutzt werden.

Jede Aussparung kann ein Langloch sein, das über eine Engstelle mit einer Fassung für den Signalgeber körperverbunden ist. Im Langloch können die meist seitlich aus dem Signalgeberkörper herausgeführten Anschlussdrähte liegen. Die Fassung bildet vorbestimmte Abstützstellen zum genauen Positionieren und Festlegen des Signalgeberkörpers, wobei dieser möglichst wenig Abstützstellen berührt, weil er ohnedies durch die Vergussmasse festgelegt ist. Durch die bogenförmigen Aufweitungen kann die Vergussmasse bis zur Bodenunterseite gelangen, so dass der Signalgeberkörper von allen Seiten fest eingebettet wird.

Der Einbaustecker ist zweckmäßig im Abstand von beiden Längsenden der Steckerleiste positioniert, damit er keine gegen Beschädigungen anfällige exponierte Position an der Steckerleiste einnimmt. Außerdem werden auf diese Weise die Anschlussstrecken zu den Signalgebem optimal kurz, insbesondere wenn sich der Einbaustecker zwischen zwei benachbarten Signalgebem befindet.

Anhand der Zeichnung werden Ausführungsformen des Erfindungsgegenstandes erläutert. Es zeigen:
- Fig. 1: eine schematische Seitenansicht einer Hydraulikbaugruppe mit einer Steckerleiste,
- Fig. 2: eine Draufsicht auf die Steckerleiste in einer Herstellungsphase,
- Fig. 3: eine Seitenansicht, teilweise im Schnitt, der Steckerleiste,
- Fig. 4: eine Druntersicht der Steckerleiste,
- Fig. 5: ein vergrößerter Ausschnitt aus Fig. 4,
- Fig. 6: eine Ansicht der Steckerleiste in Fig. 3 von links,
- Fig. 7: einen Schnitt in der Schnittebene VII - VII in Fig. 4,
- Fig. 8: einen Schnitt in der Schnittebene VIII - VIII in Fig. 4, und
- Fig. 9: einen Schnitt in der Schnittebene IX - IX in Fig. 4.

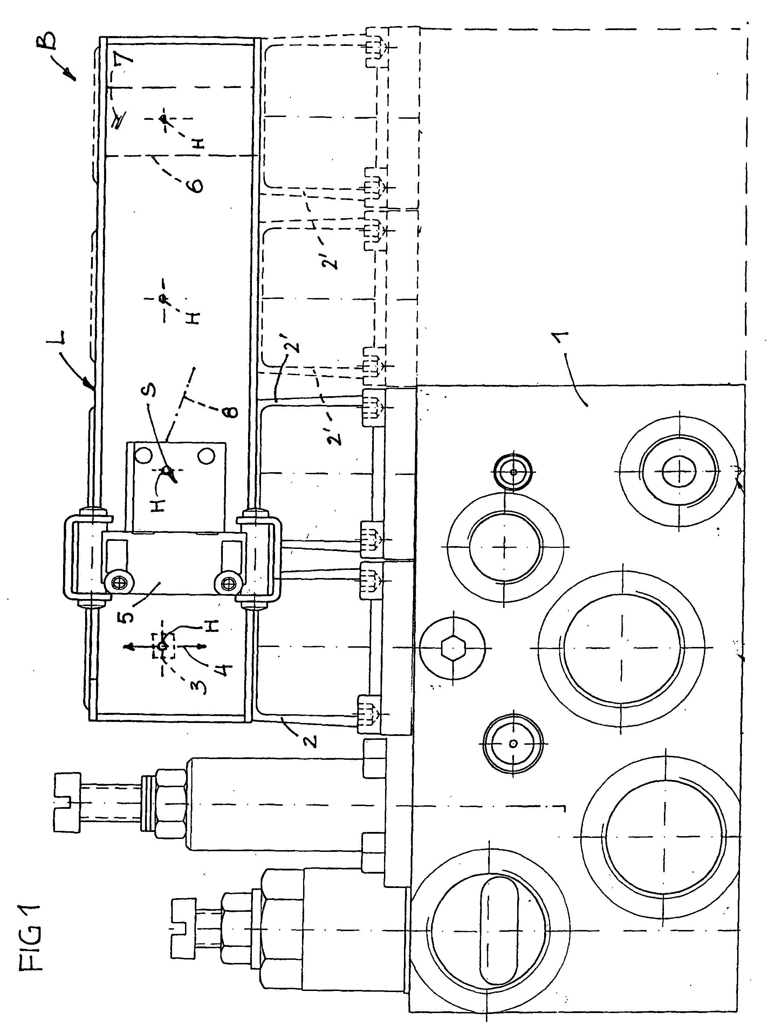

Eine in Fig. 1 in einer Seitenansicht gezeigte Hydraulikbaugruppe B eines Arbeitsgeräts (nicht gezeigt), insbesondere eines Flurförderfahrzeuges, wie eines einen Verbrennungskraftmotor oder eine Batterie als Kraftquelle aufweisenden Staplers, ist Teil einer elektrohydraulischen Steuervorrichtung für mehrere Funktionseinheiten des Arbeitsgerätes. Solche Funktionseinheiten sind beispielsweise Hydraulikzylinder oder Hydraulikmotoren, die bewegbare Komponenten des Arbeitsgerätes in ihrer Bewegungsrichtung und -geschwindigkeit steuern. Solche Hydraulikbaugruppen sind bekannt beispielsweise aus EP 1 072 867 A, die hiermit durch Rückbezug inkorporiert wird.

In der Hydraulikbaugruppe B ist jeder nicht gezeigten Funktionseinheit mindestens ein Steuerschieber zugeordnet, der mit seinem Gehäuse 2, 2' beispielsweise an einen Steuerblock 1 angebaut ist und ein in diesem Fall linear verstellbares Steuerglied 3, typischerweise einen Schieberkolben, enthält. Die Verstellung des Steuergliedes 3 erfolgt entweder manuell oder durch eine Vorsteuerung, einen Schaltmagneten oder einen Proportionalmagneten (nicht gezeigt), wie dies in der Hochdruckhydraulik üblich ist. An den Gehäusen 2, 2' sind elektronische Signalgeber H angeordnet, und zwar pro Steuerglied mindestens einer, die die Stellwege und/oder Positionen der Steuerglieder in dem wenigstens einen Gehäuse 2, 2' anhand der Kraftfelder von mit den Steuergliedern verbundener Stabmagneten überwachen und Signale liefern, die für die Stellwege und/oder Positionen repräsentativ sind. Die Signale werden in einer zugeordneten Steuerelektronik ausgewertet und für Steuerzwecke benutzt, beispielsweise zum Steuern der Fördermenge einer Hydraulikpumpe (nicht gezeigt).

Beispielsweise ist an jedem Steuerglied 3 oder in einem nicht gezeigten Verlängerungsrohr im Inneren des Gehäuses 2, 2' ein Stabmagnet angebracht, auf den bzw. auf dessen Kraftfeld bzw. Kraftfeldübergänge der außen am Gehäuse angeordnete Signalgeber H anspricht. Der Signalgeber H kann ein Reed-Schalter sein, oder, um ein analoges Wegsignal (Wegaufnehmer) zu erzeugen, ein Hallsensor, der auf die Übergänge des Kraftfeldes des Stabmagneten anspricht und eine eindeutige Aussage liefert, an welcher Position innerhalb seines Stellweges sich das Steuerglied 3 befindet, oder in welche Richtung es sich bewegt.

In der Hydraulikbaugruppe B in Fig. 1 sind die Signalgeber H in einer Steckerleiste L angeordnet und an eine allen Signalgebem H gemeinsame Signalübergabe-Schnittstellenanordnung S angeschlossen, von der die Signale zentral an die nicht gezeigte Steuerelektronik übertragen werden, und in der auch die Stromversorgung und der Nullleiter für die Signalgeber H enthalten sind. Die Steckerleiste L erstreckt sich in Fig. 1 quer über sämtliche Gehäuse 2, 2' und ist daran beispielsweise verschraubt oder mittels eines Klebebandes 7 befestigt, das an der Unterseite der Steckerleiste L angebracht ist und an beispielsweise vorgesehenen Flachstellen 6 der Gehäuse 2, 2' haftet. Es ist auch möglich, die Steckerleiste L auf andere Weise so bei oder an den Gehäusen 2 zu befestigen, dass die Signalgeber H an ihren korrekten Operationspositionen bezüglich der Steuerglieder 3 in den Gehäusen 2, 2' positioniert sind.

In Fig. 1 sind vier Gehäuse 2, 2' nebeneinanderliegend vorgesehen. Damit korrespondierend sind vier Signalgeber H in der Steckerleiste L angeordnet. Die Steuerglieder 3 sind beispielsweise in Richtung des Doppelpfeiles 4 verstellbar. Die Schnittstellenanordnung S ist in einem Einbaustecker 5 enthalten, der an der Steckerleiste L angebracht ist, und zwar zweckmäßigerweise im Abstand von beiden Längsenden der Steckerleiste L. Strichpunktiert ist ein einziges Verbindungskabel 8 zur Steuerelektronik und zur Stromversorgung angedeutet. Die Steckerleiste L kann auch mehr oder weniger als die gezeigten Signalgeber H und an anderen Positionen als gezeigt aufweisen.

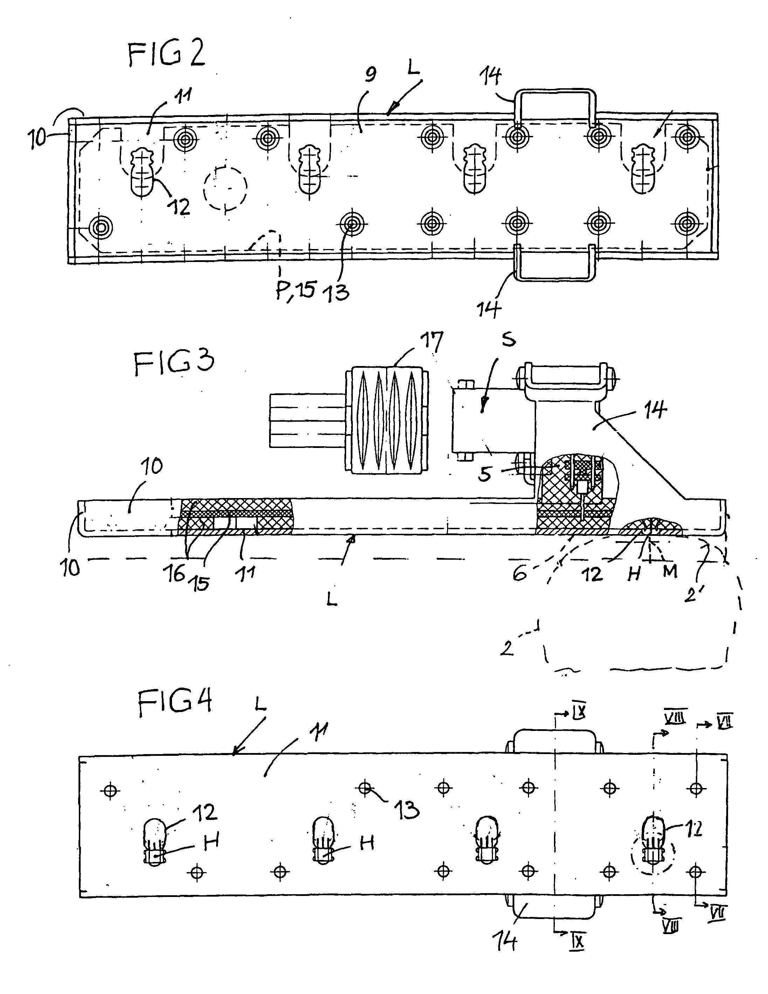

Fig. 2 ist eine Draufsicht auf die Steckerleiste L der Fig. 1 vor dem Montieren der Signalgeber H und des Einbausteckers 5. Gestrichelt ist eine Leiterplatte P, 15 angedeutet, die während eines späteren Montageschrittes eingesetzt wird. Die Steckerleiste L hat die Form einer im Grundzug rechteckigen Wanne 9 mit hochstehenden Wänden 10 und einem ebenen Boden 11. Für runde Gehäuse 2, 2' könnte der Boden 11 in unteren über dem Boden 11 vorstehenden Wänden 11' entsprechend gekrümmte Vertiefungen 2" (Fig. 3) aufweisen, um satt z.B. seitlich an die Gehäuse 2, 2' zu passen. Die gestrichelt angedeutete Leiterplatte P wird an Befestigungsstellen 13 am Boden 11 festgelegt. Ferner sind Aussparungen 12 im Boden 11 vorgesehen, in denen bei einem späteren Montageschritt die Signalgeber H so angeordnet werden, dass sie beispielsweise bündig mit der Bodenunterseite abschließen.

In Fig. 3 ist die mit nicht gezeigten Abstandselementen oberhalb des Bodens 11 positionierte Leiterplatte 15 durch die Wanne ausfüllende Vergussmasse 16 festgelegt. Die Vergussmasse 16 bettet auch die Signalgeber H in den Aussparungen 12 ein, und stellt auch einen flüssigkeitsdichten Abschluss des in der Halterung 14 angeordneten Einbausteckers 5 her. Der die Schnittstellenanordnung S bildende Einbaustecker 5 arbeitet mit einer Steckdose 17 zusammen, die über ein Verbindungskabel an die Steuerelektronik angeschlossen ist. Die Signalgeber H sind zweckmäßigerweise bündig mit der Bodenunterseite in der Steckerleiste L angeordnet. Wird die Steckerleiste L beispielsweise mittels des in Fig. 1 angedeuteten Klebebandes 7 an den Gehäusen 2, 2' festgelegt, dann kann das Klebeband auf der Bodenunterseite dazu benutzt werden, die Signalgeber H vor dem Vergießen mit der Vergussmasse 16 präzise und bündig zu positionieren. Gestrichelt ist in Fig. 3 ein Gehäuse 2 mit seiner Flachstelle 6 und einem zentrisch angeordneten Stabmagneten M in Ausrichtung auf einen Signalgeber M angedeutet.

Fig. 4 ist eine Druntersicht der Steckerleiste L mit den vier in den Aussparungen 12 positionierten Signalgebern H und den Befestigungsstellen 13 für die Leiterplatte.

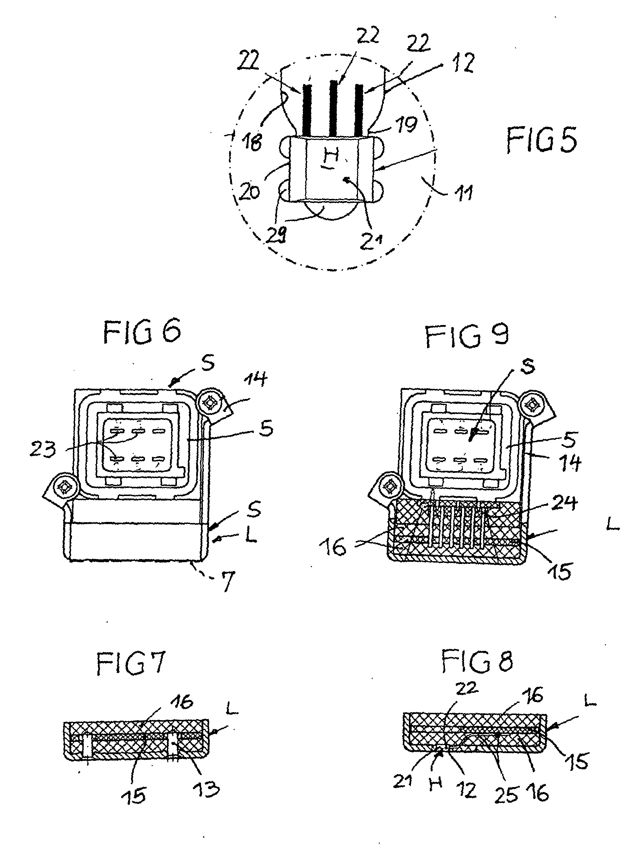

Im vergrößerten Ausschnitt in Fig. 5 (ein Teil der in Fig. 4 rechtsseitigen Aussparung 12) ist zu sehen, dass die Aussparung 12 aus einem Langloch 18 besteht, das über eine Engstelle 19 in eine im Grundzug rechteckige Fassung 20 für einen Körper 21 des Signalgebers H übergeführt ist. In der Fassung 20 sind voneinander separierte, bogenförmige Aufweitungen 29 geformt, so dass sich insgesamt mehrere Abstützstellen für den Körper 21 ergeben, und die Vergussmasse 16 den Körper 21 in den Aufweitungen 21 gut festzulegen vermag. Die Vergussmasse ist beispielsweise ein Gießharz auf Polyuhrethanbasis mit beigesetztem Härter.

In der Frontalansicht der Steckerleiste L in Fig. 6 ist die Schnittstellenanordnung S des Einbausteckers 5 erkennbar, in der individuelle Signalabgriffe 23, z.B. Steckerfahnen, als Gruppe zusammengefasst sind. Beim gezeigten Ausführungsbeispiel sind vier der Signalabgriffe 23 zum Übertragen der jeweiligen Signale vorgesehen, während ein Abgriff die gemeinsame Stromversorgung und ein weiterer Abgriff den gemeinsamen Nullleiter darstellt. Die individuellen Abgriffe 23 sind an die Leiterplatte 15 angeschlossen. Das Klebeband 7 kann sich entlang der ganzen Bodenunterseite erstrecken. Die Abgriffe 23 sind zweckmäßigerweise im Inneren eines Schachtes angeordnet, der durch die in Fig. 3 gezeigte Steckdose 17 nach außen verschlossen wird.

In der Schnittansicht in Fig. 9 (Schnittebene IX - IX in Fig. 4) ist der Einbaustecker 5 über eine Stiftleiste 24 mit der Leiterplatte 15 verbunden, wobei die Stiftleiste 24 auch zum Teil in die Vergussmasse 16 eingebettet ist.

In der Schnittansicht von Fig. 7 (Schnittebene VII - VII in Fig. 4) sind die Befestigungsstellen 13 der Steckerleiste L für die Leiterplatte 15 gezeigt.

In der Schnittansicht in Fig. 8 (Schnittebene VIII - VIII in Fig. 4) ist zu erkennen, wie von dem Körper 21 des in der Aussparung 12 bündig mit der Bodenunterseite festgelegten Signalgebers H dessen Anschlussdrähte 22 bei 25 an die Leiterplatte 15 angeschlossen, vorzugsweise angelötet, sind, und zwar ehe die Vergussmasse 16 in der Steckerleiste L die Leiterplatte 15, die Signalgeber H und die Anschlussverbindungen einbettet.

In der Steckerleiste L können unterschiedliche Arten von elektronischen Signalgebem H enthalten sein, z.B. Reedschalter und Hallsensoren. Allen Signalgebem kann ein gemeinsamer Einbaustecker 5 zugeordnet sein, der eine gemeinsame Schnittstellenanordnung S für die Signalübergabe bereitstellt. Alternativ ist es auch denkbar, jeder Gruppe unter sich gleicher Signalgeber einen Einbaustecker zuzuordnen, d.h. im Falle von Reedschaltem und Hallsensoren einen Einbaustecker für die Reedschalter und einen Einbaustecker für die Hallsensoren anzubringen. Es müssen nicht alle vorhandenen Aussparungen 12 mit Signalgebern besetzt sein.

## Patentansprüche

1. Hydraulikbaugruppe (B) für mehrere hydraulisch betätigbare Funktionseinheiten eines Arbeitsgeräts, insbesondere eines Flurförderfahrzeugs, mit mehreren in wenigstens einem Gehäuse (2, 2') verstellbaren Steuergliedern (3), deren Verstellwege und/oder Positionen mit elektronischen Signalgebern (H) überwacht werden, **dadurch gekennzeichnet, dass** für die mehreren Signalgeber (H) der mehreren Steuerglieder (3) eine gemeinsame Signalübergabe-Schnittstellenanordnung (S) mit individuellen Signalabgriffen (23) vorgesehen ist, dass die Schnittstellenanordnung (S) in einem Einbaustecker (5) vorgesehen ist, der in einer auch die Signalgeber (H) enthaltenden Steckerleiste (L) angeordnet ist, und dass die Steckerleiste (L) an dem wenigstens einen Gehäuse (2, 2') der Steuerglieder (3) und die Signalgeber (H) in der Steckerleiste (L) derart positioniert sind, dass die Signalgeber (H) ihre vorbestimmten Operationspositionen in Bezug auf die Steuerglieder (3) einnehmen.

2. Hydraulikbaugruppe nach Anspruch 1, **dadurch gekennzeichnet, dass** in der Schnittstellenanordnung (S) ein allen Signalgebern (H) gemeinsamer Versorgungsstromanschluss und ein gemeinsamer Nullleiteranschluss vorgesehen sind.

3. Hydraulikbaugruppe nach Anspruch 1, **dadurch gekennzeichnet, dass** die Signalgeber (H) Analog-Hallsensoren sind, und dass die Steuerglieder (3) Magneten, insbesondere Stabmagneten (M), enthalten.

4. Hydraulikbaugruppe nach Anspruch 1, **dadurch gekennzeichnet, dass** die Steckerleiste (L) eine langgestreckte Wanne (9) mit randseitiger Halterung (14) für den Einbaustecker (5) ist, und dass in der Wanne (9), vorzugsweise über Distanzstücke, wenigstens eine Leiterplatte (P, 15) positioniert ist, an die die Signalgeber (H) und der Einbaustecker (5) angeschlossen sind.

5. Hydraulikbaugruppe nach Anspruch 3, **dadurch gekennzeichnet, dass** jeder Körper (21) eines Analog-Hallsensors mit Anschlussdrähten (22) am Boden (11) oder in einer Aussparung (12) des Bodens (11) der Steckerleiste (L) positioniert ist.

6. Hydraulikbaugruppe nach Anspruch 4, **dadurch gekennzeichnet, dass** die Wanne (9) mit Vergussmasse (16) ausgegossen ist, die die Signalgeber (H), die Leiterplatte (15) und Anschlussverbindungen einbettet.

7. Hydraulikbaugruppe nach Anspruch 1, **dadurch gekennzeichnet, dass** die Steckerleiste (L) mit ihrer Bodenunterseite mittels eines Klebebandes (7) oder durch eine Verschraubung an dem wenigstens einen Gehäuse (2, 2') festgelegt ist, vorzugsweise im Bereich wenigstens einer an die seitliche Gehäusekontur angeordneten Vertiefung (2").

8. Hydraulikbaugruppe nach Anspruch 5, **dadurch gekennzeichnet, dass** jede Aussparung (12) ein Langloch (18) ist, das über eine Engstelle (19) mit einer Fassung (20) für den Signalgeberkörper (21) verbunden ist, und dass die Fassung (20) durch bogenförmige Aufweitungen (29) separierte Abstützstellen für den Signalgeber-Körper (21) aufweist.

9. Hydraulikbaugruppe nach Anspruch 1, **dadurch gekennzeichnet, dass** der Einbaustecker (5) im Abstand von jedem Längsende der Steckerleiste (L) angeordnet ist, vorzugsweise an einer Längsposition zwischen zwei benachbarten Signalgebern (H).

10. Steckerleiste (L) für eine Hydraulikgruppe mit mehreren in wenigstens einem Gehäuse (2, 2') verstellbaren Steuergliedem (3), deren Verstellwege und/oder Positionen mit elektronischen Signalgebern (H) überwacht werden, **dadurch gekennzeichnet, dass** in der Steckerleiste (L) die elektronischen Signalgeber (H) in auf die relativen Positionen der Steuerglieder (3) in dem wenigstens einen Gehäuse (2, 2') abgestimmten Operationspositionen angebracht und mit einem an der Steckerleiste gehalterten Einbaustecker (5) verbunden sind, dass der Einbaustecker (5) eine allen Signalgebem (H) gemeinsame Signalübergabe-Schnittstellenanordnung (S) mit individuellen Signalabgriffen (23) bildet, und dass die Steckerleiste (L) eine Schraub- oder Klebebefestigung zur direkten Anordnung an dem wenigstens einen Gehäuse (2, 2') aufweist.

## Claims

1. Hydraulic assembly (B) for two or more hydraulically operable functioning units in a machine, in particular an industrial truck, having two or more control elements (3) which can be moved in at least one housing (2, 2') and whose movement paths and/or positions are monitored by means of electronic signal transmitters (H), **characterized in that** a common signal transmission interface arrangement (S) with individual signal taps (23) is provided for the two or more signal transmitters (H) of the two or more control elements (3), **in that** the interface arrangement (S) is provided in a built-in plug (5) which is arranged in a plug connector strip (L) which also contains the signal transmitters (H), and **in that** the plug connector strip (L) is positioned on the at least one housing (2, 2') of the control elements (3) and the signal transmitters (H) are positioned in the plug connector strip (L), such that the signal transmitters (H) assume their predetermined operating positions with respect to the control elements (3).

2. Hydraulic assembly according to Claim 1, **characterized in that** a supply power connection, which is common to all the signal transmitters (H), and a common neutral conductor connection are provided in the interface arrangement (S).

3. Hydraulic assembly according to Claim 1, **characterized in that** the signal transmitters (H) are analogue Hall sensors, and **in that** the control elements (3) contain magnets, in particular bar magnets (M).

4. Hydraulic assembly according to Claim 1, **characterized in that** the plug connector strip (L) is an elongated trough (9) with a holder (14) at the edge for the built-in plug (5), and **in that** at least one printed circuit board (P, 15) to which the signal transmitters (H) and the built-in plug (5) are connected, is positioned in the trough (9) preferably by means of spacers.

5. Hydraulic assembly according to Claim 3, **characterized in that** each body (21) of an analogue Hall sensor is positioned with connecting wires (22) at the base (11), or in a cutout (12) in the base (11) of the plug connector strip (L).

6. Hydraulic assembly according to Claim 4, **characterized in that** the trough (9) is encapsulated with potting compound (16), which embeds the signal transmitters (H), the printed circuit board (15) and the connections.

7. Hydraulic assembly according to Claim 1, **characterized in that** the lower face of the base of the plug connector strip (L) is fixed on the at least one housing (2, 2') by means of an adhesive tape (7) or by means of a screw connection, preferably in the area of at least one depression (2") which is arranged on the side housing contour.

8. Hydraulic assembly according to Claim 5, **characterized in that** each cutout (12) is an elongated hole (18) which is connected via a constriction (19) to a socket (20) for the signal transmitter body (21), and **in that** the socket (20) has support points (which are separated by curved widened areas (29), for the signal transmitter body (21).

9. Hydraulic assembly according to Claim 1, **characterized in that** the built-in plug (5) is arranged at a distance from each longitudinal end of the plug connector strip (L), preferably at a longitudinal position between two adjacent signal transmitters (H).

10. Plug connector strip (L) for a hydraulic assembly having two or more control elements (3) which can be moved in at least one housing (2, 2') and whose adjustment paths and/or positions are monitored by means of electronic signal transmitters (H), **characterized in that** the electronic signal transmitters (H) are fitted in the plug connector strip (L) in operating positions which are matched to the relative positions of the control elements (3) in the at least one housing (2, 2'), and are connected to a built-in plug (5) which is held on the plug connector strip, **in that** the built-in plug (5) forms a signal transmission interface arrangement (S) which is shared by all the signal transmitters (H) and has individual signal taps (23), and **in that** the plug connector strip (L) has a screw or adhesive bonding attachment for direct arrangement on the at least one housing (2, 2').

## Revendications

1. Assemblage hydraulique (B) pour plusieurs unités fonctionnelles à commande hydraulique d'un engin de travail, en particulier d'un chariot de manutention, comportant plusieurs organes de commande (3) mobiles dans au moins un boîtier (2, 2'), dont les courses de déplacement et/ou les positions sont surveillées par des générateurs de signaux électroniques (H), **caractérisé en ce que** pour les plusieurs générateurs de signaux (H) des plusieurs organes de commande (3) est prévu un dispositif d'interface de transmission de signaux (S) commun comportant des contacts de signaux (23) individuels, que le dispositif d'interface (S) est prévu dans un connecteur encastré (5), qui est disposé dans une barrette de connexion (L) contenant également les générateurs de signaux (H), et que la barrette de connexion (L) sur le au moins un boîtier (2, 2') des organes de commande (3) et les générateurs de signaux (H) dans la barrette de connexion (L) sont positionnés de telle façon que les générateurs de signaux (H) adoptent leur positions opératoires prédéfinies par rapport aux organes de commande (3).

2. Assemblage hydraulique selon la revendication 1, **caractérisé en ce que** dans le dispositif d'interface (S) sont prévues une connexion d'alimentation électrique commun à tous les générateurs de signaux (H) et une connexion neutre commune.

3. Assemblage hydraulique selon la revendication 1, **caractérisé en ce que** les générateurs de signaux (H) sont des capteurs Hall analogiques et que les organes de commande (3) comprennent des aimants, en particulier des barrettes magnétiques (M).

4. Assemblage hydraulique selon la revendication 1, **caractérisé en ce que** la barrette de connexion (L) est une cuvette allongée (9) avec fixation marginale (14) pour le connecteur encastré (5) et que dans la cuvette (9) est positionnée, de préférence par l'intermédiaire de pièces d'écartement, au moins une carte de circuit imprimé (P, 15), à laquelle sont raccordés les générateurs de signaux (H) et le connecteur encastré (5).

5. Assemblage hydraulique selon la revendication 3, **caractérisé en ce que** chaque corps (21) d'un capteur Hall analogique est positionné avec des fils de raccordement (22) sur le fond (11) ou dans un évidement (12) du fond (11) de la barrette de connexion (L).

6. Assemblage hydraulique selon la revendication 4, **caractérisé en ce que** la cuvette (9) est remplie de masse remplissage (16), qui enrobe les générateurs de signaux (H), la carte de circuit imprimé (15) et les liaisons de raccordement.

7. Assemblage hydraulique selon la revendication 1, **caractérisé en ce que** la barrette de connexion (L) est fixée par le dessous de son fond au moyen d'un ruban adhésif (7) ou par un vissage au au moins un boîtier (2, 2'), de préférence dans la région d'au moins une encoche (2") disposée sur le contour de boîtier latéral.

8. Assemblage hydraulique selon la revendication 5, **caractérisé en ce que** chaque évidement (12) est un trou oblong (18) qui est relié par un étranglement (19) à un logement (20) pour le corps (21) de générateur de signaux, et que le logement (20) présente des points d'appui pour le corps (21) de générateur de signaux, séparés par des élargissements en forme d'arc (29).

9. Assemblage hydraulique selon la revendication 1, **caractérisé en ce que** le connecteur encastré (5) est disposé à distance de chaque extrémité longitudinale de la barrette de connexion (L), de préférence en une position longitudinale entre deux générateurs de signaux (H) voisins.

10. Barrette de connexion (L) pour un assemblage hydraulique comportant plusieurs organes de commande (3) mobiles dans au moins un boîtier (2, 2'), dont les courses de déplacement et/ou les positions sont surveillées par des générateurs de signaux électroniques (H), **caractérisée en ce que** dans la barrette de connexion (L) les générateurs de signaux (H) électroniques sont montés dans des positions opératoires adaptées aux positions relatives des organes de commande (3) dans le au moins un boîtier (2, 2') et sont reliés à un connecteur encastré (5) maintenu sur la barrette de connexion, que le connecteur encastré (5) forme un dispositif d'interface de transmission de signaux (S) commun à tous les générateurs de signaux (H), présentant des contacts de signaux (23) individuels, et que la barrette de connexion (L) présente une fixation vissée ou collée pour l'agencement direct sur le au moins un boîtier (2, 2').
